# FASCICULE DE BREVET EUROPEEN

(11) **EP 3 519 306 B1**
(45) Date de publication et mention de la délivrance du brevet: **28.10.2020**
(21) Numéro de dépôt: 17769044.3
(22) Date de dépôt: 18.09.2017
(51) Int. Cl.: B65B 57/04, B65B 57/06, B65B 57/14, B65B 5/10, B65B 5/12, B25J 9/16

(54) **PROCEDE DE CHARGEMEMENT AUTOMATISE D'UNE CAISSE AVEC DES OBJETS AU MOYEN D'UN ROBOT PREHENSEUR**
VERFAHREN ZUR AUTOMATISIERTEN BEFÜLLUNG VON KISTEN MITTELS EINER ROBOTERHAND
METHOD FOR THE AUTOMATED FILLING OF A CRATE WITH OBJECTS BY MEANS OF A ROBOT HAND

(30) Priorité: 28.09.2016 FR 1659191; 28.09.2016 FR 1659192
(43) Date de publication de la demande: 07.08.2019
(73) Titulaire: Grosbois, Jérôme, 62000 Arras (FR)
(72) Inventeur: Grosbois, Jérôme, 62000 Arras (FR)
(74) Mandataire: Matkowska, Franck
(86) Numéro de dépôt international: PCT/EP2017/073386
(87) Numéro de publication internationale: WO 2018/059977

(56) Documents cités:
- DE-A1-102012 008 128
- FR-A1- 2 935 957
- US-B1- 7 644 558
- US-B2- 9 067 744

## Description

### Domaine technique

La présente invention concerne un nouveau procédé de chargement automatisé d'une caisse avec des objets, au moyen d'un robot préhenseur. Elle trouve son application dans tout type d'industrie et/ou tout type d'application dans lesquels il existe un besoin de ranger automatiquement des objets dans une caisse, par exemple pour leur stockage et/ou leur transport. L'invention s'applique à tout type d'objets. De manière limitative et non exhaustive de l'invention, les objets peuvent par exemple être des pièces mécaniques, des paquets, boîtes, des emballages, etc...

### Art antérieur

On a déjà proposé, par exemple dans la demande de brevet américain US 2010/0222915 et dans les brevets américains US 6 055 462 et US 8 644 984, d'utiliser un robot préhenseur, piloté automatiquement pour prendre un à un sur un convoyeur de transport des objets empilables, et par exemple de boîtes empilables, et pour les empiler automatiquement les uns sur les autres sur une palette, c'est à-dire sur un support plan ne comportant pas de paroi latérale verticale.

Les solutions techniques décrites dans ces publications sont adaptées pour palettiser de manière automatisée des objets empilables, conformément à un plan de palettisation prédéfini, mais ne sont pas prévues pour charger de manière automatisée avec des objets une caisse comportant au moins une paroi latérale verticale.

On a par ailleurs déjà proposé, par exemple dans le brevet américain US 9 067 744, d'utiliser un robot préhenseur, piloté automatiquement pour empiler automatiquement des objets, et par exemple des colis, dans une caisse montée sur roulettes de manière à former un chariot. Dans cette publication, cette caisse comporte plus particulièrement une paroi de fond et trois parois latérales verticales.

On a également déjà proposé dans le brevet américain US 7 644 558 d'utiliser un robot préhenseur pour empiler automatiquement et de manière itérative des objets dans une caisse.

Dans le cas d'un chargement automatisé d'une caisse avec des objets empilables ou non empilables, il arrive régulièrement qu'au moins une des parois latérales verticales de la caisse soit suffisamment endommagée ou déformée, de telle sorte qu'il n'est pas possible de remplir la caisse avec des objets en mettant en œuvre le plan de chargement de la caisse jusqu'à son terme.

Dans ce cas, la procédure de chargement automatisé de la caisse avec des objets doit être interrompue prématurément, avant que plan de chargement da la caisse ne soit terminé, et en pratique un opérateur est contraint d'intervenir pour décharger manuellement ladite caisse et pour la remplacer par une caisse en bon état, avant de relancer la procédure de chargement automatisé.

Dans le cas d'un chargement automatisé d'une caisse avec des objets empilables ou non empilables, il arrive également régulièrement qu'une pièce soit mal positionnée, et perturbe le chargement des pièces suivantes en empêchant de remplir la caisse et de mettre en œuvre le plan de chargement de la caisse jusqu'à son terme.

Dans ce cas, la procédure de chargement automatisé de la caisse avec des objets doit également être interrompue prématurément, avant que plan de chargement de la caisse ne soit terminé, et en pratique un opérateur est contraint d'intervenir manuellement, avant de relancer la procédure de chargement automatisé

### Objectif de l'invention

Un objectif de l'invention est de proposer un nouveau procédé de chargement automatisé d'une caisse avec des objets, au moyen d'un robot préhenseur, qui permet de fiabiliser un procédé itératif de remplissage d'une caisse avec des objets au moyen d'un robot préhenseur, tel que celui divulgué par exemple dans le brevet américain US 7 644 558 susvisé..

### Résumé de l'invention

L'invention a également pour objet un procédé de chargement automatisé d'une caisse avec des objets au moyen d'un robot préhenseur, dans lequel on réalise de manière automatique et itérative la succession d'étapes suivantes :
(a) on positionne, au moyen du robot préhenseur, un objet dans la caisse dans une position définie par un plan de chargement de caisse,
(b) on acquiert au moins une image numérique de la caisse contenant un ou plusieurs objets,
(c) on vérifie automatiquement dans la ou les images numériques obtenues à l'étape précédente si l'objet qui a été positionné à l'étape (a) est correctement positionné ; dans l'affirmative on passe à l'étape suivante et dans la négative on retire l'objet mal positionné au moyen du robot préhenseur (3) et on réitère le procédé à l'étape (a) avec ce même objet.

Dans le cadre de l'invention, le terme « caisse » doit être pris dans son acceptation la plus large. En particulier, la caisse peut avoir une géométrie quelconque, l'invention n'étant pas limitée à des caisses parallélépipédiques et notamment cubiques. La caisse peut avoir des dimensions plus ou moins importantes en fonction des domaines d'application, et de manière non limitative et non exhaustive de l'invention peut être un bac, une benne, un conteneur,.... Le ou les matériaux constitutifs de la caisse sont sans importance pour l'invention.

Dans le cadre de l'invention, le terme « objet» doit être pris dans son acceptation la plus large. Dans le cadre de l'invention, et de manière non limitative et non exhaustive de l'invention, un objet peut être monobloc ou constitué par un assemblage de pièces ; un objet peut par exemple être une pièce mécanique, un colis, un paquet, une boîte vide ou remplie, un emballage, etc.

L'invention a également pour objet un système de chargement automatisé comportant un robot préhenseur, un capteur permettant l'acquisition d'au moins une image numérique d'une caisse vide ou contenant au moins un objet, et un dispositif électronique de commande qui est conçu pour piloter le robot préhenseur, de manière à mettre en œuvre le premier et/ou deuxième procédé de chargement susvisé(s).

L'invention a également pour objet un produit programme informatique comprenant des instructions de code de programme et conçu pour, lorsqu'il est exécuté par des moyens électroniques de commande d'un robot préhenseur, acquérir au moins une image numérique d'une caisse vide, vérifier automatiquement la conformité de la caisse en utilisant la ou les images numériques de la caisse, et si la caisse est conforme, poursuivre le chargement au moyen du robot préhenseur, et dans le cas contraire à arrêter le chargement de la caisse.

L'invention a également pour objet un produit programme informatique comprenant des instructions de code de programme et conçu pour, lorsqu'il est exécuté par des moyens électroniques de commande d'un robot préhenseur, commander automatiquement ledit robot préhenseur de manière à exécuter au moins les étapes du deuxième procédé de chargement susvisé.

### Brève description des figures

D'autres caractéristiques et avantages de l'invention apparaîtront plus clairement à la lecture de la description détaillée ci-après d'une variante particulière de réalisation de l'invention, laquelle variante particulière de réalisation est décrite à titre d'exemple non limitatif et non exhaustif de l'invention et en référence aux dessins annexés sur lesquels :
- la figure 1 est une vue schématique d'ensemble d'un système de chargement d'une caisse avec des pièces acheminées par un convoyeur,
- la figure 2 est une vue isométrique d'un exemple particulier de caisse vide,
- la figure 3 est une vue isométrique d'un empilement de pièces résultant de la mise en œuvre d'un plan de chargement de caisse prédéfini,
- la figure 4 est une vue isométrique de la caisse de la figure 2, une fois celle-ci remplie de pièces,
- la figure 5 est un organigramme représentant les principales étapes successives d'une routine de vérification automatique de conformité de d'une caisse vide,
- la figure 6 est un organigramme représentant les principales étapes successives d'une routine de chargement automatique d'une caisse au moyen du robot préhenseur du système de chargement de la figure 1,
- la figure 7 est une vue de dessus d'un exemple de caisse non conforme, dont une paroi verticale est déformée.

### Description détaillée

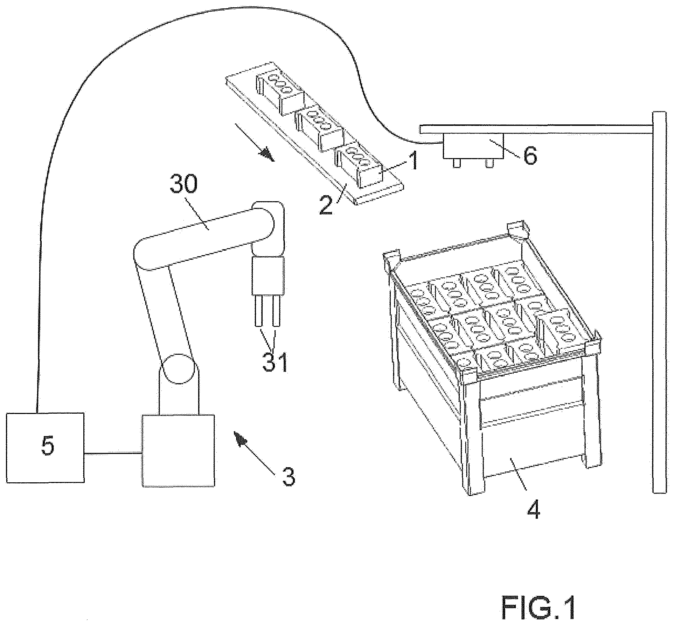

En référence à la variante particulière de réalisation du système de chargement de la figure 1, des objets 1 empilables, en l'occurrence dans cet exemple particulier des pièces mécaniques, sont acheminés par un convoyeur 2 jusqu'à une station de chargement comprenant une caisse 4. Un robot préhenseur 3, comportant un bras articulé 30 qui est équipé à son extrémité d'un organe de préhension 31, est utilisé pour prélever automatiquement un à un les objets 1 sur le convoyeur 2, et pour les déposer successivement dans la caisse 4 en suivant un plan de chargement.

Dans cet exemple de la figure 1, les objets 1 sont tous identiques. Dans une autre variante, ils pourraient être différents.

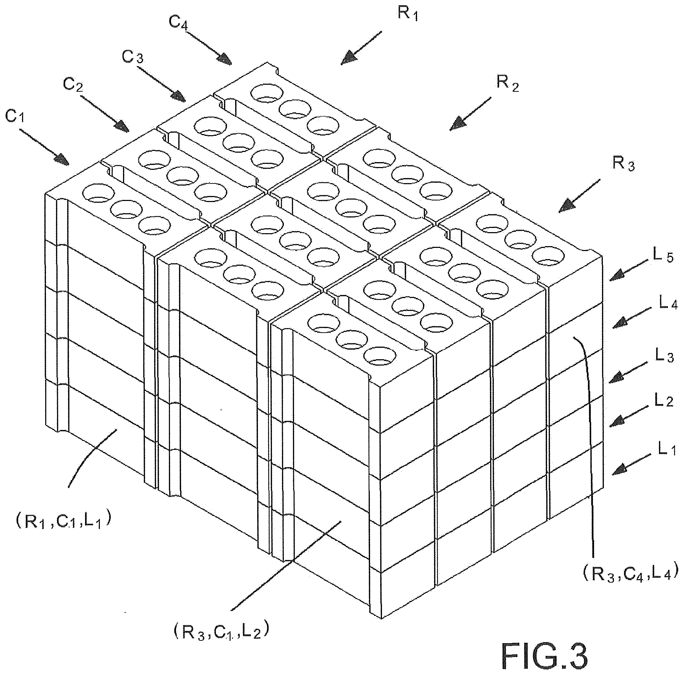

En référence à la figure 3, dans cet exemple particulier et de manière non limitative de l'invention, le plan de chargement est défini de telle sorte que lorsqu'il est exécuté complètement, on constitue un empilement de cinq couches L₁ à Ls d'objets 1, chaque couche L₁ à Ls comportant douze objets 1 juxtaposés sous la forme d'une rangée Rᵢ de trois objets 1 et d'une colonne Cj de quatre objets 1. Ce plan de chargement est constitué par exemple par une liste des couches L₁ à Ls associant à chaque couche Lₖ sa position en hauteur dans l'empilement, et la rangée Rᵢ et la colonne Cⱼ de chaque objet 1 dans la couche Lₖ.

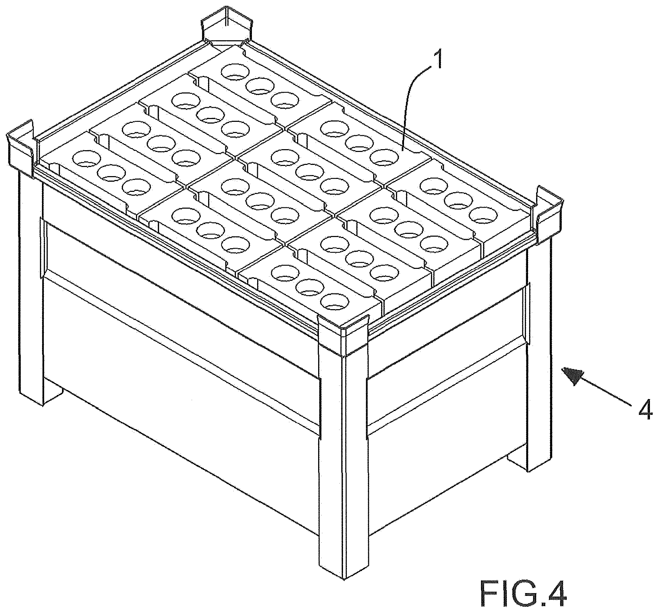

On a représenté sur la figure 4, une caisse 4 remplie d'objets 1, qui ont été empilés dans cette caisse 4, en suivant ledit plan de chargement pour obtenir un empilement d'objets conforme à celui de la figure 3.

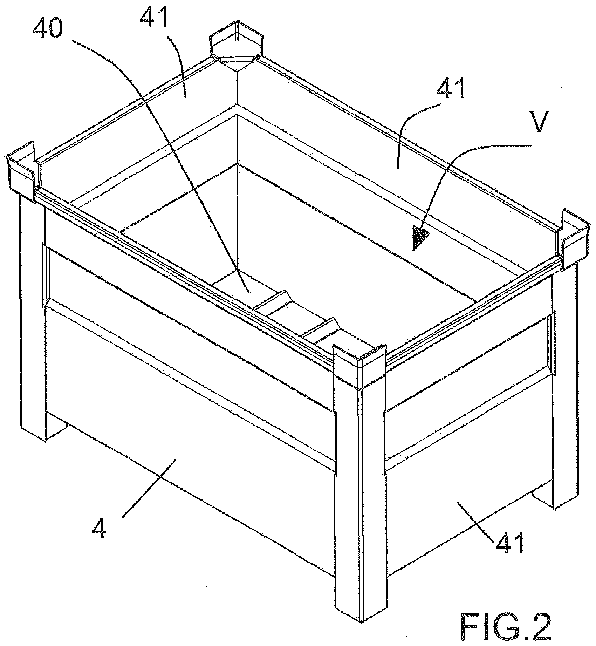

En référence à la figure 2, la caisse 4 est ouverte en partie supérieure pour permettre son chargement. Elle comporte une paroi de fond 40 et des parois verticales 41 qui délimitent un volume de chargement V.

Le robot préhenseur 3 est commandé automatiquement par un dispositif électronique de commande 5, qui permet de piloter automatiquement les déplacements du bras articlé 30 et de commander l'organe de préhension 31, en exécutant un programme informatique de chargement, qui par exemple est stocké dans une mémoire électronique de ce dispositif 5.

Le système de chargement comporte en outre un capteur 6 sans contact, qui permet d'acquérir, en vue de dessus, au moins une image numérique 2D ou 3D de la caisse 4 (vide ou contenant des objets 1) positionnée dans la station de chargement. Cette image numérique 2D ou 3D de la caisse 4 (vide ou contenant des objets 1) est transmise au dispositif électronique de commande 5, par voie filaire ou par une voie de communication sans fil.

Dans une variante, le système peut comporter plusieurs capteurs 6, permettant par exemple d'acquérir des images 2D ou 3D de la caisse avec des angles de vue différents. Dans une variante, le système peut également comporter des moyens permettant de reconstituer, par stéréovision, une image en trois dimensions de la caisse 4, à partir de deux images 2D ou plus acquises par des capteurs 6.

Dans le cadre de l'invention, différents types de capteurs 6 peuvent être mis en œuvre. De manière non limitative et non exhaustive de l'invention, le capteur 6 peut par exemple être :
- une caméra, par exemple de type CCD ou autre ;
- un capteur de numérisation permettant d'acquérir une image de la caisse 4 (vide ou contenant des objets 1) sous la forme d'un nuage de points 3D ; par exemple le capteur 6 comporte une caméra, par exemple de type CCD ou autre, combinée à une source lumineuse de type laser balayant la surface de la caisse 4 (vide ou contenant des objets 1), la caméra permettant de capter le faisceau lumineux réfléchi par la surface de la caisse et le cas échéant des objets placés dans le champ de la caméra.
- un capteur ou ensemble de capteurs fonctionnant par télémétrie et utilisant une source laser, ultrasons, microondes,...

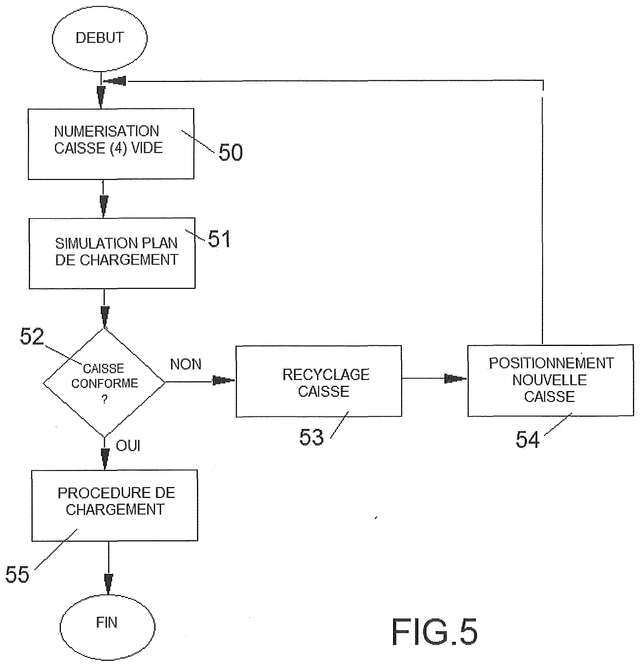

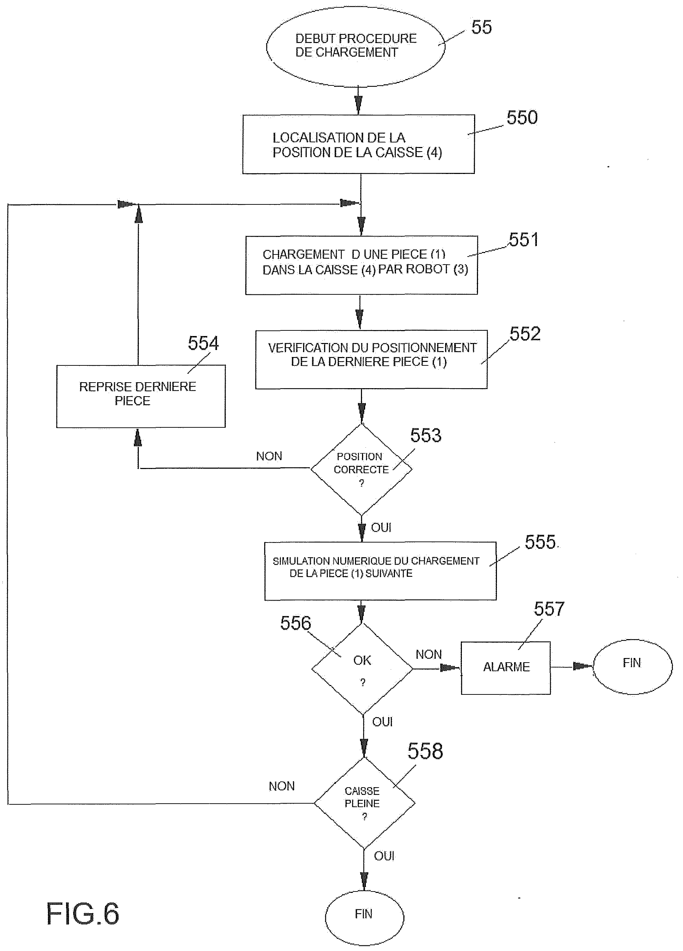

Un exemple particulier de programme de chargement et de sa mise en œuvre pour le chargement d'une caisse 4 avec des objets 1 vont à présent être détaillé en référence aux organigrammes des figures 5 et 6.

Un opérateur positionne une caisse 4 vide au-dessous du capteur 6 et lance la procédure de chargement automatisée.

Lorsque procédure de chargement automatisée est lancée, le dispositif électronique de commande 5 commence par exécuter la routine initiale de vérification de la figure 5.

En référence à cette figure 5, lorsque la routine initiale de vérification est démarrée, le dispositif électronique de commande 5 déclenche une acquisition par le capteur 6 d'une image numérique de la caisse vide 4 (étape 50), laquelle image est transmise au dispositif électronique de commande 5.

Ensuite, le dispositif de commande 5 vérifie automatiquement (étape 51) si la caisse 4 est conforme en utilisant ladite image numérique de la caisse.

Plus particulièrement, cette vérification est de préférence réalisée en simulant automatiquement un plan de changement prédéfini, au moyen de ladite image numérique de la caisse 4 vide et d'un modèle CAO de la pièce 1, de manière à s'assurer que la totalité des pièces 1 du plan de chargement (soit 60 pièces dans l'exemple des figures 3 et 4) peut être chargée dans la caisse 4. A cet effet, le plan de changement a par exemple été stocké dans une mémoire du dispositif de commande 5.

Dans une autre variante, le dispositif de commande 5 peut être programmé pour calculer automatiquement ce plan de chargement à partir d'un modèle CAO de la pièce 1 et d'un modèle CAO de la caisse 4 vide.

Dans une autre variante, le dispositif de commande 5 peut être programmé pour exécuter un plan de changement prédéfini stocké dans une mémoire du dispositif de commande 5, et pour le cas échéant modifier de manière dynamique ce plan de de chargement au cours du procédé de chargement de la caisse, de manière par exemple à optimiser automatiquement le chargement de la caisse.

Dans une autre variante, la conformité de la caisse 4, peut également être vérifiée automatiquement en comparant l'image numérique de la caisse 4 vide, acquise à l'étape 50, avec un modèle numérique CAO de la caisse vide, stocké en mémoire du dispositif électronique de commande 5.

Si la caisse 4 est détectée comme n'étant pas conforme (test 52), le dispositif électronique de commande 5 arrête la procédure, et avertit l'opérateur que la caisse 4 vide qui a été positionnée n'est pas conforme, par exemple en déclenchant une alarme visuelle/ou sonore et/ou en affichant un message sur un écran.

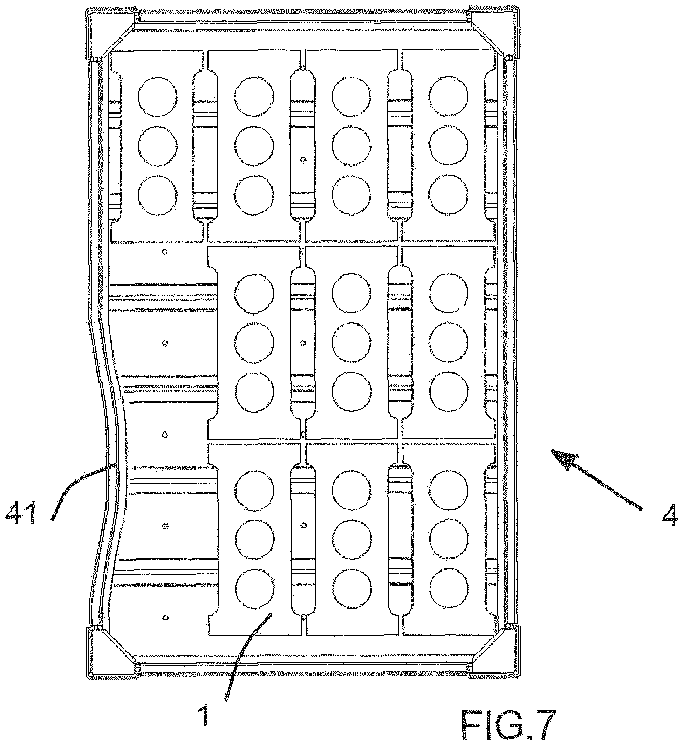

On a représenté sur la figure 7, un exemple de caisse 4 non conforme, dont l'une des parois verticales 41 est suffisamment déformée pour que la caisse ne puisse pas être chargée avec le nombre voulu de pièces 1, le plan de chargement ne pouvant pas être mis en œuvre jusqu'au bout.

L'opérateur averti retire la caisse vide 4, qui a été détectée comme non conforme, en vue par exemple de la recycler (étape 53) et la remplace par une nouvelle caisse 4 vide (étape 54).

Une fois la nouvelle caisse 4 vide positionnée, l'opérateur relance la procédure de vérification de la figure 5.

On évite ainsi toute perte de temps en évitant de démarrer inutilement la procédure de chargement avec une caisse défectueuse.

Si la caisse est conforme (test 52), le dispositif électronique de commande 5 exécute la routine de chargement automatisée de la figure 6, détaillée ci-après.

Lorsque la routine de chargement automatisé de la figure 6 est lancée, le dispositif électronique de commande 5 localise automatiquement la position de la caisse vide (étape 550), par exemple à partir de la ou des images numériques acquises au moyen du capteur 6. En variante, cette étape 550 pourrait être supprimée, sous réserve que la caisse vide soit toujours postionnée de manière précise systématiquement dans une position de chargement prédéfinie et connue du dispositif électronique de commande 5.

Ensuite, le dispositif électronique de commande 5 commande (étape 551), de manière connue en soit, le robot 3 de manière à ce qu'il saisisse une pièce 1 sur le convoyeur 2 et la positionne dans la caisse 4, en appliquant le plan de chargement prédéfini stocké en mémoire ou calculé automatiquement par le dispositif électronique de commande 5 .

Ensuite, (étape 552) le dispositif électronique de commande 5 acquiert, au moyen du capteur 6, une image numérique de la caisse 4 contenant une ou plusieurs pièces 1, et vérifie automatiquement dans cette image numérique, en utilisant le modèle CAO de la pièce 1, que la dernière pièce 1 qui été positionnée est correctement positionnée.

Dans la négative (test 553), le dispositif électronique de commande 5 commande le robot 3, de manière à ce qu'il saisisse cette dernière pièce mal positionnée (étape 554), et on réitère les opérations jusqu'à ce que cette pièce soit correctement positionnée.

Dans l'affirmative (test 553), la dernière pièce 1 chargée étant correctement positionnée dans la caisse 4, on simule numériquement (étape 555) le positionnement de la pièce 1 suivante en utilisant dans l'image de la caisse 4 précédemment acquise, un modèle numérique CAO de la pièce 1, et le plan de chargement stocké en mémoire ou calculé automatiquement par le dispositif électronique de commande 5 .

Si le résultat de cette simulation est négatif (test 556), la pièce 1 suivante ne peut être chargée correctement à la bonne position dans la caisse 4, dans ce cas le dispositif électronique de commande 5 déclenche une alarme (étape 557) pour l'opérateur, et met fin prématurément à la procédure de chargement automatisée.

Si au contraire le résultat de cette simulation est positif (test 556), le dispositif électronique de commande 5 vérifie (test 558) si la caisse 4 est pleine (par exemple en ayant compté le nombre de pièces chargées et en le comparant au nombre total de pièces voulus dans la caisse 4).

Si la caisse 4 est pleine, il arrête la procédure de chargement, afin de permettre à l'opérateur de retirer la caisse pleine et de mettre en place une nouvelle caisse 4 vide.

Si la caisse 4 n'est pas pleine, la procédure est reprise automatiquement à l'étape 551.

L'invention trouve préférentiellement son application à un chargement automatisé d'une caisse 4 avec des objets empilés, mais peut également être mise en œuvre pour réaliser un chargement automatisé d'une caisse 4 avec des objets qui ne sont pas empilés dans la caisse, mais sont par exemple positionnés dans des cases intérieures de la caisse à raison par exemple d'un objet par case.

Dans l'exemple qui a été décrit, la caisse 4 comporte des parois verticales qui entourent l'ensemble des objets 1 chargés dans la caisse sur toute la périphérie de cet ensemble d'objets. Dans une autre variante, la ou les parois verticales de la caisse pourraient entourer l'ensemble des objets 1 chargés dans la caisse sur une partie de la périphérie de cet ensemble d'objets.

Dans une autre variante, les objets ne sont pas nécessairement amenés par un convoyeur 2, mais peuvent être stockés de manière statique (par exemple en en vrac ou en étant empilés) sur une aire de stockage accessible au robot préhenseur 3.

## Revendications

1. Procédé de chargement automatisé d'une caisse avec des objets (1) au moyen d'un robot préhenseur (3), dans lequel on réalise de manière automatique et itérative la succession d'étapes suivantes :
(a) on positionne, au moyen du robot préhenseur (3), un objet (1) dans la caisse (4) dans une position définie par un plan de chargement de caisse,
(b) on acquiert au moins une image numérique de la caisse (4) contenant un ou plusieurs objets,
(c) on vérifie automatiquement dans la ou les images numériques obtenues à l'étape précédente si l'objet qui a été positionné à l'étape (a) est correctement positionné ; dans l'affirmative on passe à l'étape suivante et dans la négative on retire l'objet mal positionné au moyen du robot préhenseur (3) et on réitère le procédé à l'étape (a) avec ce même objet.

2. Procédé selon la revendication 1, au cours duquel on met en œuvre une étape (d) supplémentaire au cours de laquelle on vérifie numériquement, si un objet (1) suivant peut être positionné dans la caisse (4) conformément au plan de chargement de caisse, notamment en utilisant un modèle numérique CAO de l'objet (1) ; dans la négative on arrête le procédé de chargement, et dans l'affirmative, si la caisse n'est pas remplie, on réitère le procédé à l'étape (a) avec un nouvel objet.

3. Procédé selon l'une quelconque des revendications 1 ou 2, au cours duquel, préalablement à l'étape (a) on acquiert au moins une image numérique de la caisse (4) vide, on vérifie automatiquement la conformité de la caisse en utilisant la ou les images numériques de la caisse et si la caisse est conforme, on poursuit le procédé de chargement de la caisse au moyen du robot préhenseur (3), et dans le cas contraire on remplace la caisse par une nouvelle caisse.

4. Procédé selon la revendication 3, dans lequel ladite vérification automatique de la conformité de la caisse est réalisée en en utilisant la ou les images numériques de la caisse et en simulant numériquement un plan de chargement de caisse.

5. Procédé selon l'une quelconque des revendications 1 à 4, dans lequel les objets (1) sont empilés les uns sur les autres dans la caisse (4).

6. Système de chargement automatisé comportant un robot préhenseur (3), un capteur (6) permettant l'acquisition d'au moins une image numérique d'une caisse vide ou contenant au moins un objet (1), et un dispositif électronique de commande (5) qui est conçu pour piloter le robot préhenseur (3), de manière à mettre en œuvre le procédé de chargement visé à l'une quelconque des revendications 1 à 5.

7. Produit programme informatique comprenant des instructions de code de programme et conçu pour, lorsqu'il est exécuté par des moyens électroniques de commande (5) d'un système de chargement automatisé comportant un robot préhenseur (3) et un capteur (6) permettant l'acquisition d'au moins une image numérique, commander automatiquement ledit robot préhenseur (3) de manière à exécuter au moins les étapes du procédé de chargement visé à l'une quelconque des revendications 1 ou 2.

8. Produit programme informatique selon la revendication 7, conçu pour, lorsqu'il est exécuté par lesdits moyens électroniques de commande (5) d'un robot préhenseur (3), acquérir au moins une image numérique d'une caisse (4) vide, vérifier automatiquement la conformité de la caisse en utilisant la ou les images numériques de la caisse, et si la caisse est conforme, poursuivre le chargement au moyen du robot préhenseur (3), et dans le cas contraire arrêter le chargement de la caisse (4).

9. Produit programme informatique selon la revendication 8, conçu pour réaliser ladite vérification automatique de la conformité de la caisse en utilisant la ou les images numériques de la caisse et en simulant numériquement un plan de chargement de caisse.

## Patentansprüche

1. Verfahren zum automatisierten Befüllen eines Kastens mit Objekten (1) mittels eines Robotergreifers (3), wobei automatisch und iterativ die Abfolge der folgenden Schritte durchgeführt wird:
(a) mittels des Robotergreifers (3) wird ein Objekt (1) in dem Kasten (4) in einer Position, die durch einen Befüllungsplan des Kastens definiert ist, positioniert,
(b) es wird mindestens ein digitales Bild des ein oder mehrere Objekte enthaltenden Kastens (4) aufgenommen,
(c) es wird in dem oder den in dem vorhergehenden Schritt erhaltenen digitalen Bild/Bildern automatisch verifiziert, ob das Objekt, das in dem Schritt (a) positioniert worden war, richtig positioniert ist; falls ja, wird zum nächsten Schritt weitergegangen, falls nicht, wird das schlecht positionierte Objekt mittels des Robotergreifers (3) zurückgezogen und das Verfahren wird bei dem Schritt (a) mit dem gleichen Objekt wiederholt.

2. Verfahren nach Anspruch 1, wobei ein ergänzender Schritt (d) durchgeführt wird, bei dem digital verifiziert wird, ob ein folgendes Objekt (1) in dem Kasten (4) in Übereinstimmung mit dem Befüllungsplan des Kastens positioniert werden kann, insbesondere unter Verwendung eines digitalen CAD-Modells des Objekts (1); wobei im negativen Fall der Befüllprozess angehalten wird und im positiven Fall, wenn der Kasten nicht gefüllt ist, das Verfahren bei Schritt (a) mit einem neuen Objekt wiederholt wird.

3. Verfahren nach Anspruch 1 oder 2, wobei vorab bei Schritt (a) mindestens ein digitales Bild des leeren Kastens (4) aufgenommen wird, automatisch die Übereinstimmung des Kastens unter Verwendung des digitalen Bilds oder der digitalen Bilder des Kästen verifiziert wird, und, wenn der Kasten übereinstimmt, der Befüllprozess des Kastens mittels des Robotergreifers (3) fortgesetzt wird und im anderen Fall der Kasten durch einen neuen Kasten ersetzt wird.

4. Verfahren nach Anspruch 3, wobei das automatische Verifizieren der Übereinstimmung des Kastens unter Verwendung des digitalen Bilds oder der digitalen Bilder des Kastens und unter numerischer Simulation eines Befüllungsplans des Kastens vorgenommen wird.

5. Verfahren nach einem der Ansprüche 1 bis 4, wobei die Objekte (1) in dem Kasten (4) aufeinandergestapelt werden.

6. Automatisiertes Befüllungssystem, mit einem Robotergreifer (3), einem Sensor (6), welcher die Aufnahme mindestens eines digitalen Bilds eines leeren Kastens oder eines mindestens ein Objekt (1) enthaltenden Kastens ermöglicht, und eine elektronische Steuerung (5), die dazu ausgelegt ist, den Robotergreifer (3) zu lenken, um das in einem der Ansprüche 1 bis 5 vorgesehene Befüllungsverfahren durchzuführen.

7. Computerprogramm, welches Programmcodeanweisungen enthält und dazu ausgelegt ist, bei dessen Ausführung mit einer elektronischen Steuerung (5) eines automatisierten Befüllungssystems, welches einen Robotergreifer (3) und einen Sensor (6), welcher die Aufnahme mindestens eines digitalen Bilds ermöglicht, aufweist, den Robotergreifer (3) automatisch zu steuern, um zumindest die in einem der Ansprüche 1 oder 2 vorgesehenen Schritte des Befüllungsverfahrens auszuführen.

8. Computerprogramm nach Anspruch 7, welches ausgelegt ist, um bei dessen Ausführung durch die Steuerung (5) eines Robotergreifers (3) mindestens ein digitales Bild eines leeren Kastens (4) aufzunehmen, automatisch unter Verwendung des digitalen Bilds oder der digitalen Bilder die Übereinstimmung des Kastens zu verifizieren, und wenn der Kasten übereinstimmt, das Befüllen mittels des Robotergreifers (3) fortzusetzen oder im anderen Fall das Befüllen des Kastens (4) zu stoppen.

9. Computerprogramm nach Anspruch 8, welches dazu ausgelegt ist, die automatische Verifizierung der Übereinstimmung des Kastens unter Verwendung des digitalen Bilds oder der digitalen Bilder des Kastens und unter numerischer Simulation eines Befüllungsplans des Kastens zu realisieren.

## Claims

1. A method for automated filling of a crate with objects (1) by means of a robot hand (3), in which that the following succession of steps is carried out in an automatic and repeated manner:
(a) an object (1) is positioned in the crate (4) by means of the robot hand (3), in a position defined by a crate-filling plan,
(b) at least one digital image of the crate (4) containing at least one object is acquired,
(c) it is automatically verified, in the at least one digital image obtained in the previous step, whether the object positioned in step (a) is correctly positioned; if it is, the subsequent step is carried out, and if not, the badly positioned object is removed by the robot hand (3) and the method is repeated at step (a) with the same object.

2. The method according to claim 1, during which an additional step (d) is carried out during which it is digitally verified whether a following object (1) can be positioned in the crate (4) according to the crate filling plan, in particular using a CAD digital model of the object (1); if not, the filling method is stopped, and if so, if the crate is not filled, the method is repeated at step (a) with a new object.

3. The method according to any one of claims 1 or 2, during which, before step (a), at least one digital image of the empty crate (4) is acquired, the compliance of the crate is verified automatically by using the at least one digital image of the crate, and if the crate is compliant, the method for filling the crate is continued by means of the robot hand (3), and if not, the crate is replaced with a new crate.

4. The method according to claim 3, wherein said automatic verification of the compliance of the crate is done by using the at least one digital image of the crate and digitally simulating a crate-filling plan.

5. The method according to any one of claims 1 to 4, wherein the objects (1) are stacked on one another in the crate (4).

6. An automated filling system including a robot hand (3), a sensor (6) allowing the acquisition of at least one digital image of an empty crate or a crate containing at least one object (1), and an electronic control device (5) that is designed to control the robot hand (3), so as to implement the filling method targeted in any one of claims 1 to 5.

7. A computer program product comprising program code instructions and designed, when it is executed by electronic control means (5) of an automated loading system comprising a robot hand (3) and a sensor (6) allowing the acquisition of at least one digital image, to control said robot hand (3) automatically so as to execute at least the steps of the filling method of any one of claims 1 or 2.

8. The computer program product according to claim 7, designed, when it is executed by said electronic control means (5) of a robot hand (3), to acquire at least one digital image of an empty crate (4), automatically verify the compliance of the crate by using the at least one digital image of the crate, and if the crate is compliant, continue the filling by means of the robot hand (3), and if not, stop the filling of the crate (4).

9. The computer program product according to claim 8, designed to perform said automatic verification of the compliance of the crate by using the at least one digital image of the crate and digitally simulating a crate filling plan.
